# EUROPEAN PATENT APPLICATION

(11) **EP 4 671 305 A1**
(43) Date of publication of application: **31.12.2025**
(21) Application number: 25185489.9
(22) Date of filing: 26.06.2025
(51) Int. Cl.: C08G 71/02, C08G 71/04, C08J 5/18, C08L 75/02, C08L 75/06, C08L 75/08

(54) **CONDENSATION TYPE POLYURETHANE RESIN, WATERPROOF AND MOISTURE-PERMEABLE MEMBRANE PREPARED USING THE SAME, AND METHOD FOR MANUFACTURING THE SAME**

(30) Priority: 28.06.2024 US 202418758594; 28.06.2024 US 202463665254 P; 31.12.2024 TW 113151655
(71) Applicant: Far Eastern New Century Corporation, Taipei (TW)
(72) Inventor: HUNG, Wei-Che, 10602 Taipei City (TW); WANG, Cheng-Ting, 10602 Taipei City (TW)
(74) Representative: Zimmermann, Tankred Klaus

(57) **Abstract**

A condensation type polyurethane resin includes a urea unit represented by Formula (I), a carbamate unit represented by Formula (II), an ethylene glycol unit represented by Formula (III), and a terminal amine unit. In the condensation type polyurethane resin, a number of hydrogen atoms belonging to the urea unit is defined as A1, a number of hydrogen atoms belonging to the carbamate unit is defined as A2, and a number of hydrogen atoms belonging to the ethylene glycol unit is defined as A3. A1/(A1+A2) ranges from 0.10 to 0.30, and A3/(A1+A2) ranges from 3 to 21. The condensation type polyurethane resin has an amine value of at least 10 meq/kg. A waterproof and moisture-permeable membrane prepared by subjecting a mixture including the aforesaid condensation type polyurethane resin to a film-forming process, and a method for manufacturing a condensation type polyurethane resin are also provided.

## Description

The disclosure relates to a condensation type polyurethane resin, a waterproof and moisture-permeable membrane prepared using the same, and a method for manufacturing the same.

A conventional polyurethane is generally prepared using isocyanate and polyol as raw materials (e.g., TW I788086 B, US 11414543 B2, and US 20240336720 A1). In the manufacturing process of the conventional polyurethane, not only the isocyanate is itself toxic, but also requires use of another more toxic raw material, which is phosgene. Therefore, the industry actively pursues the concept of green manufacturing in the manufacturing process of non-isocyanate polyurethane (NIPU).

In the concept of green manufacturing, NIPU is mainly manufactured by a poly-addition process or a polycondensation process in which the structures of products obtained are different from each other.

U.S. 20230183423 A1 discloses that NIPU may be prepared by subjecting multiple cyclic carbonate and polyamine to an addition polymerization process. The thus synthesized NIPU has (-OH) functional groups on side chains thereof, and hence is known as polyhydroxyurethane (PHU) with a chemical structure represented by 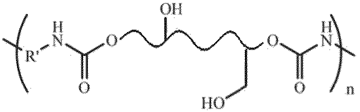 . Due to the presence of abundant hydrogen bonding forces between PHU molecules, fluidity of the PHU is poor, which is not conducive to a subsequent process in which the PHU is made into a waterproof and moisture-permeable membrane. Addition of a solvent into the PHU is usually required for making the PHU into such waterproof and moisture-permeable membrane.

In contrast, a condensation polymerization process generally involves reacting diamine and carbonate, followed by a transesterification reaction with polyol so as to obtain NIPU. Thus, the NIPU synthesized by the condensation polymerization process does not have side chains containing (-OH) functional groups, indicating that the chemical structure of such NIPU is different from that of the PHU as described above.

CN 101696271 A, CN 103865059 A, CN 116355210 A, CN 112853531 A, and CN 104513393 B each discloses use of carbonate and diamine to prepare a dicarbamate monomer (i.e., a type of urethane diol), followed by a polymerization reaction with polyol, so as to obtain NIPU suitable for direct melt processing. However, preparation of the dicarbamate monomer requires use of organic solvents for purification by recrystallization, so as to remove impurities (e.g., urea-containing small molecules), causing generation of a large amount of liquid waste that needs to be recycled separately, indicating that such preparation process is energy-consuming and not environmentally friendly. Additionally, a film made of the aforesaid NIPU cannot exhibit good waterproof performance (hydrostatic pressure resistance) and good moisture permeability.

In addition, TW 201634531 A and CN 107400233 B disclose use of carbonate and diamine in a molar ratio of 1:1 to prepare polyurea; however, the chemical structures of polyurea and polyurethane are very different as shown below.
Polyurea: 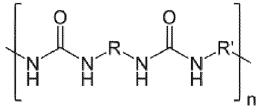
Polyurethane:

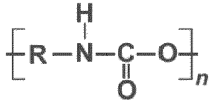

Since hydrogen bonding forces between polyurea molecules are very strong, a film made from the aforesaid polyurea may have an overly hard feel.

Although the concept of green manufacturing that is environmentally friendly exist in the preparation of the NIPU as mentioned above, when the NIPU is subsequently used to make the waterproof and moisture-permeable membrane, the moisture permeability, strength and textile sense thereof, and the feasibility of solvent-free processing still need to be considered.

Therefore, an object of the disclosure is to provide a condensation type polyurethane resin, a method for manufacturing the same and a waterproof and moisture-permeable membrane prepared using the same that can alleviate at least one of the drawbacks of the prior art.

According to an aspect of the disclosure, there is provided the condensation type polyurethane resin according to claim 1.

According to an aspect of the disclosure, there is provided the method according to claim 10.

According to an aspect of the disclosure, there is provided the waterproof and moisture-permeable membrane according to claim 13.

Before the present disclosure is described in greater detail, it should be noted that if any prior art publication is referred to herein, such reference does not constitute an admission that the publication forms a part of the common general knowledge in the art, in Taiwan or any other country.

For the purpose of this specification, it will be clearly understood that the word "comprising" means "including but not limited to", and that the word "comprises" has a corresponding meaning.

Unless otherwise defined, all technical and scientific terms used herein have the meaning commonly understood by a person skilled in the art to which the present disclosure belongs. One skilled in the art will recognize many methods and materials similar or equivalent to those described herein, which could be used in the practice of the present disclosure. Indeed, the present disclosure is in no way limited to the methods and materials described.

The present disclosure provides a condensation type polyurethane resin including a urea unit represented by Formula (I), a carbamate unit represented by Formula (II), an ethylene glycol unit represented by Formula (III), and a terminal amine unit, 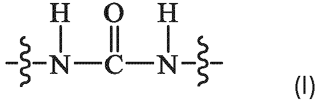 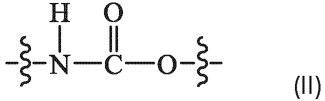 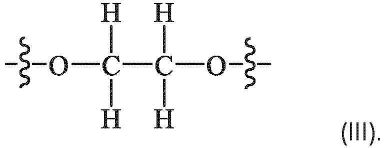 In the condensation type polyurethane resin, a number of hydrogen atoms belonging to the urea unit is defined as A1, a number of hydrogen atoms belonging to the carbamate unit is defined as A2, and a number of hydrogen atoms belonging to the ethylene glycol unit is defined as A3. A1/(A1+A2) ranges from 0.10 to 0.30, and A3/(A1+A2) ranges from 3 to 21. In addition, condensation type polyurethane resin has an amine value of at least 10 meq/kg.

According to the present disclosure, the condensation type polyurethane resin is a condensation type non-isocyanate polyurethane resin.

In certain embodiments, A1/(A1+A2) may range from 0.15 to 0.25.

In certain embodiments, A3/(A1+A2) may range from 6 to 17.

In some embodiments, the condensation type non-isocyanate polyurethane resin may further include a diol unit represented by Formula (IV), 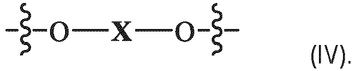 In Formula (IV), X is selected from a non-ethylene hydrocarbylene group or an oxygen-containing organic group. In still some embodiments, X may be selected from the group consisting of a hydrocarbylene group of C₃ to C₂₀, 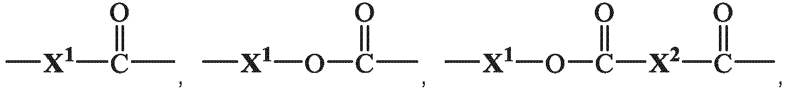 and combinations thereof. Each of X¹ and X² is independently a hydrocarbylene group of C₂ to C₂₀.

In certain embodiments, each of A1, A2 and A3 may be determined by integrating a peak area in an ¹H NMR spectrum of the condensation type non-isocyanate polyurethane resin.

In certain embodiments, the condensation type non-isocyanate polyurethane resin may include a first carbamate segment (containing the terminal amine unit, which is particularly a primary amine) represented by Formula (V), a second carbamate segment (containing the ethylene glycol unit) represented by Formula (VI), and a urea-containing segment represented by Formula (VII), 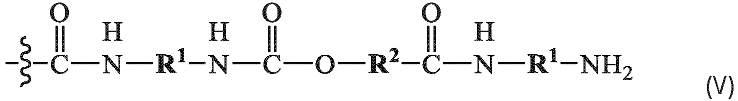 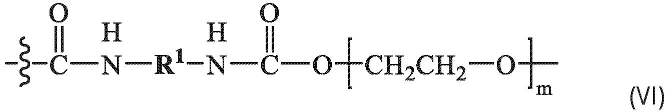 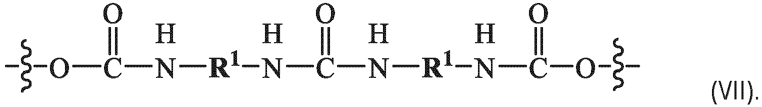 In each of Formulae (V) to (VII), R¹ is a hydrocarbylene group of C₂ to C₂₀, and R² is selected from the group consisting of 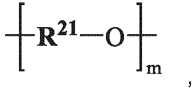 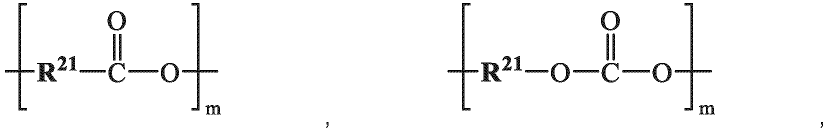 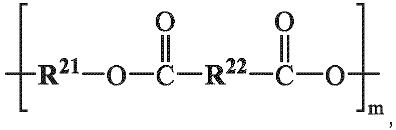 and combinations thereof. Each of R²¹ and R²² is independently a hydrocarbylene group of C₂ to C₂₀, and m is an integer ranging from 1 to 250.

In other embodiments, at least one end of the urea-containing segment may be linked to R2.

In certain embodiments, the condensation type non-isocyanate polyurethane resin may further include a third carbamate segment represented by Formula (VIII), 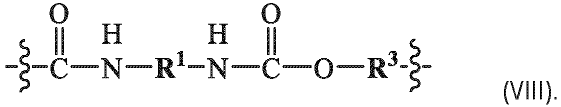 In Formula (VIII), R¹ is a hydrocarbylene group of C₂ to C₂₀, and R³ is selected from the group consisting of 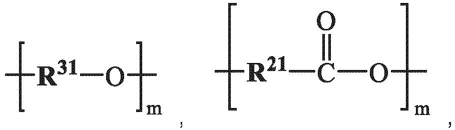 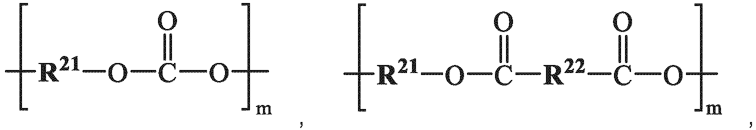 and combinations thereof. Each of R²¹ and R²² is independently a hydrocarbylene group of C₂ to C₂₀, R³¹ is a hydrocarbylene group of C₃ to C₂₀, and m is an integer ranging from 1 to 250.

In certain embodiments, R² may be selected from the group consisting of 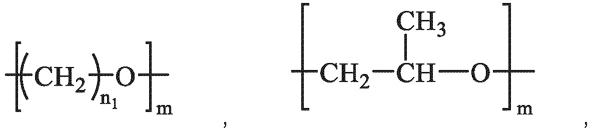 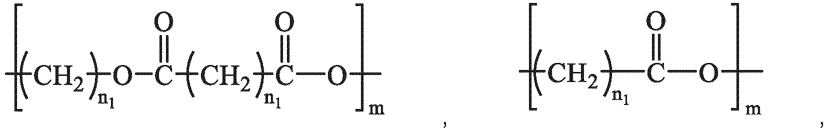 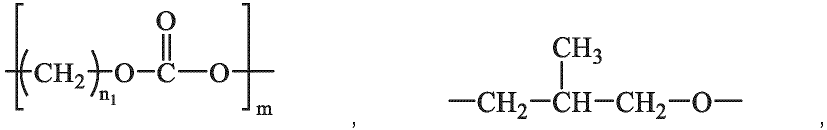 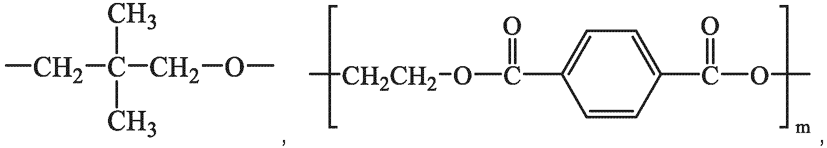 and combinations thereof, where n₁ is an integer ranging from 2 to 20, and m is an integer ranging from 1 to 250.

In certain embodiments, R² may be selected from the group consisting of 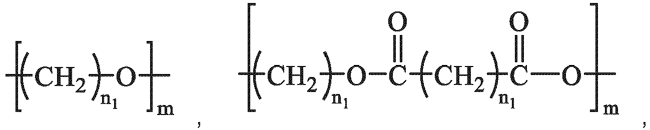 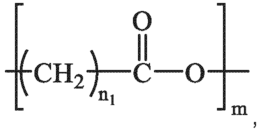 and combinations thereof.

The present disclosure also provides a method for manufacturing a condensation type polyurethane resin. The condensation type polyurethane resin is formed by subjecting a diamine compound, a carbonate compound and a diol compound to a reaction. The diol compound includes a polyethylene glycol. Based on 100 wt% of a total amount of the diamine compound, the carbonate compound and the diol compound, the polyethylene glycol is present in an amount ranging from 10 wt% to 60 wt%. The condensation type polyurethane resin includes the first carbamate segment represented by Formula (V), the second carbamate segment represented by Formula (VI), and the urea-containing segment represented by Formula (VII), 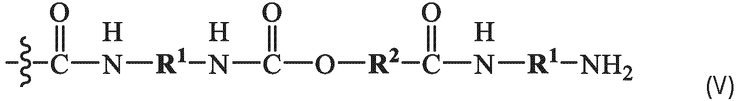 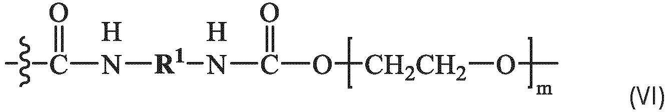 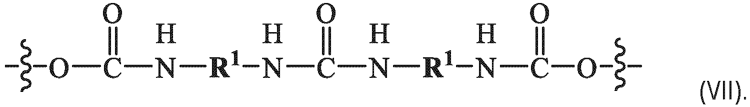 In each of Formulae (V) to (VII), R¹ is a hydrocarbylene group of C₂ to C₂₀, and R₂ is selected from the group consisting of 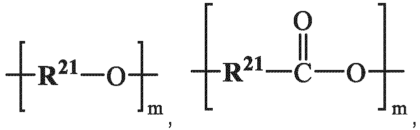 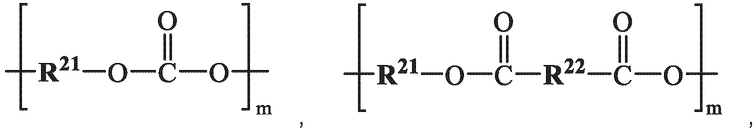 and combinations thereof. Each of R²¹ and R²² is independently a hydrocarbylene group of C₂ to C₂₀, and m is an integer ranging from 1 to 250.

According to the present disclosure, the condensation type polyurethane resin is a condensation type non-isocyanate polyurethane resin.

In certain embodiments, the diamine compound is selected from the group consisting of cyclic diamines, acyclic diamines, and a combination thereof. In certain embodiments, the diamine compound may be selected from the group consisting of pentylenediamine, hexylenediamine, decanediamine, m-phenylenediamine, 1,3-bis(aminomethyl)cyclohexane, and combinations thereof.

In certain embodiments, the diol compound is selected from the group consisting of cyclic diol, acyclic diol, and a combination thereof. In certain embodiments, the diol compound is selected from the group consisting of ether diol (e.g., polyalkyl diol), ester diol (e.g., polyester diol), carbonate diol (e.g., polycarbonate diol), and alkyl diol (e.g., alkylene diol). In certain embodiments, the diol compound is selected from the group consisting of polyethylene glycol (PEG), poly(tetramethylene ether) glycol (PTMEG), polypropylene glycol (PPG), poly(propylene-co-ethylene) glycol (PPG-co-PEG), polybutylene adipate (PBA), poly(1,6-hexamethylene adipate) (PHA), poly(ethylene adipate) (PEA), poly(butylene succinate) (PBS), poly(ε-caprolactone) (PCL), bis(2-hydroxyethyl)terephthalate (BHET) oligomer, poly(hexamethylene carbonate) diol (PHC diol), polyethylene carbonate (PEC), polypropylene carbonate (PPC), ethylene glycol (EG), propylene glycol (PG), butanediol (BDO), neopentyl glycol (NPG), 2-methyl-1,3-propanediol (MPDO), diethylene glycol (DEG), triethylene glycol (TEG), bis(2-hydroxyethyl)terephthalate (BHET), 1,4-cyclohexanedimethanol, isosorbide glycol (ISOS), tetramethylcyclobutanediol (TMCD), and combinations thereof.

In certain embodiments, the diol compound is a combination of at least two of the diols in the group mentioned above. In certain embodiments, the diol compound is a combination of two of the diols in the group mentioned above, and a weight ratio of the two of the diols ranges from 1:10 to 10:1. In some embodiments, the weight ratio of the two of the diols may range from 1:5 to 5:1, In still some embodiments, the weight ratio of the two of the diols may range from 1:2 to 2:1.

In certain embodiments, based on the total amount of the diamine compound, the carbonate compound and the diol compound as 100 wt%, the polyethylene glycol may be present in an amount ranging from 20 wt% to 60 wt%. In other embodiments, the diol compound may further include a non-polyethylene glycol diol compound.

Specifically, the method for manufacturing the condensation type non-isocyanate polyurethane resin may include subjecting the diamine compound and the carbonate compound to a carbamation reaction so as to form a carbamate mixture that includes an amine hydrocarbamate and a hydrocarbon dicarbamate diester, and then subjecting the carbamate mixture and the diol compound to a polycondensation reaction so as to form the condensation type non-isocyanate polyurethane resin.

The present disclosure further provides a waterproof and moisture-permeable membrane, which is prepared by subjecting a mixture including the aforesaid condensation type polyurethane resin to a film-forming process.

According to the present disclosure, the condensation type polyurethane resin is a condensation type non-isocyanate polyurethane resin.

Examples of equipment that can be used to prepare the waterproof and moisture-permeable membrane of the present disclosure may include, but are not limited to, an extruder combined with a blown film machine, and a coating machine. Specifically, the procedures for using the extruder to prepare the waterproof and moisture-permeable membrane of the present disclosure may include injecting the condensation type non-isocyanate polyurethane resin into the extruder, which is a twin-screw extruder, melting the condensation type non-isocyanate polyurethane resin in the twin-screw extruder, and then blowing the condensation type non-isocyanate polyurethane resin that is molten into a film (i.e., the waterproof and moisture-permeable membrane) using the blown film machine.

The waterproof and moisture-permeable membrane of the present disclosure can further be attached to other fabrics, such as non-woven fabrics, knitted fabrics, or plain-woven fabrics. Implementation of attachment is not particularly limited. For example, the attachment may be carried out using either solvent-based or solvent-free process through adhesion or coating techniques.

In certain embodiments, the waterproof and moisture-permeable membrane may have a moisture permeability ranging from 10000 g/m²·24 hours to 100000 g/m²·24 hours as determined in accordance with Japanese Industrial Standards (JIS) L1099 B1.

In certain embodiments, the waterproof and moisture-permeable membrane may have a Young's modulus ranging from 15 MPa to 60 MPa as determined in accordance with American Society for Testing and Materials (ASTM) D412.

According to the present disclosure, the waterproof and moisture-permeable membrane may be applied in various fields, e.g., automobiles, toys, biomedical products, electronic products, shoe materials (i.e., the entire shoe including outsole, midsole, insole, upper, etc.), sports equipment, textiles (e.g., fiber or film), and other daily necessities, or in food and construction industries, and may be used in coatings, adhesives, wires and cables, etc. It should be noted that in order to be applied in different fields, the condensation type non-isocyanate polyurethane resin for preparing the waterproof and moisture-permeable membrane may be required to have different properties. In this regard, the condensation type non-isocyanate polyurethane composition of the present disclosure suitable for applications in different fields may be prepared by selecting different types of the diamine compound, the carbonate compound, or the diol compound.

According to the present disclosure, the waterproof and moisture-permeable membrane made from the aforesaid condensation type non-isocyanate polyurethane resin can exhibit a dry and non-sticky tactile feel, and has moderate elasticity.

The present disclosure will be described by way of the following examples. However, it should be understood that the following examples are intended solely for the purpose of illustration and should not be construed as limiting the present disclosure in practice.

### Preparation of condensation type non-isocyanate polyurethane resin Example 1 (E1)

First, 110 g of ethylene carbonate (EC) (purchased from Oriental Union Chemical Corporation), 225 g of poly(tetramethylene ether) glycol 1000 (PTMEG 1000) (purchased from Formosa Asahi Spandex Co., Ltd.), and 45 g of polyethylene glycol 600 (PEG 600) (purchased from Oriental Union Chemical Corporation) were mixed in a 1 L stainless steel reactor, and then stirred at 50°C for 30 minutes, so as to obtain a mixture. After that, 70 g of hexane-1,6-diamine (HMDA) (purchased from Huafon Chemical Co., Ltd.) was added to the mixture, followed by conducting a carbamation reaction at 75°C under stirring for 5 hours, thereby obtaining a carbamate mixture of E1.

After adding stannous chloride (SnCl₂) (serving as a catalyst) into the aforesaid reactor, a polycondensation reaction was conducted at 180°C and at a pressure of not greater than 30 torr for a time period of 0.5 hours, followed by controlling the pressure by reduction of the same to 3 torr for a time period within 1 hour until the product viscosity no longer increased, so as to obtain a condensation type non-isocyanate polyurethane resin of E1.

### Examples 2 and 3 (E2 and E3)

The procedures and conditions for preparing the condensation type non-isocyanate polyurethane resin of each of E2 and E3 were substantially similar to those of E1, except that in E2, PEG 600 was replaced with polyethylene glycol 1000 (PEG 1000), and in E3, PEG 600 was replaced with polyethylene glycol 2000 (PEG 2000) (both PEG 1000 and PEG 2000 were purchased from Oriental Union Chemical Corporation), and that in E2, the time period for controlling the pressure reduction from 30 torr to 3 torr was changed to be within 2 hours, and in E3, the time period for controlling the pressure reduction from 30 torr to 3 torr was changed to be within 3 hours. The condensation type non-isocyanate polyurethane resin of each of E2 and E3 was thus obtained.

### Examples 4 to 18 (E4 to E18)

The procedures and conditions for preparing the condensation type non-isocyanate polyurethane resin of each of E4 to E18 were substantially similar to those of E1 to E3, except that the amount of PTMEG 1000, the type and amount of PEG, and the time period (abbreviated as "T1") for controlling the pressure reduction from 30 torr to 3 torr were varied as shown in Table 1 below. The condensation type non-isocyanate polyurethane resin of each of E4 to E18 was thus obtained.

**Table 1**

| Example | Amount of PTMEG 1000 (g) | Type/amount (g) of PEG | T1 |
|---|---|---|---|
| E4 | 180 | PEG 600 / 90 | Within 1 hour |
| E5 | 180 | PEG 1000 / 90 | Within 2 hours |
| E6 | 180 | PEG 2000 / 90 | Within 3 hours |
| E7 | 135 | PEG 600 / 135 | Within 1 hour |
| E8 | 135 | PEG 1000 / 135 | Within 2 hours |
| E9 | 135 | PEG 2000 / 135 | Within 3 hours |
| E10 | 90 | PEG 600 / 180 | Within 1 hour |
| E11 | 90 | PEG 1000 / 180 | Within 2 hours |
| E12 | 90 | PEG 2000 / 180 | Within 3 hours |
| E13 | 45 | PEG 600 / 225 | Within 1 hour |
| E14 | 45 | PEG 1000 / 225 | Within 2 hours |
| E15 | 45 | PEG 2000 / 225 | Within 3 hours |
| E16 | 0 | PEG 600 / 270 | Within 1 hour |
| E17 | 0 | PEG 1000 / 270 | Within 2 hours |
| E18 | 0 | PEG 2000 / 270 | Within 3 hours |

### Examples 19 to 21 (E19 to E21)

The procedures and conditions for preparing the condensation type non-isocyanate polyurethane resin of each of E19 to E21 were substantially similar to those of E2, except that in E19, HMDA was replaced with m-xylylenediamine (MXDA) (purchased from Mitsubishi Chemical Group), in E20, HMDA was replaced with 1,3-bis(aminomethyl)cyclohexane (1,3-BAC) (purchased from Mitsubishi Chemical Group), and in E21, HMDA was replaced with pentamethylene diamine (PMDA) (purchased from Cathay Biotech Inc.). The condensation type non-isocyanate polyurethane resin of each of E19 to E21 was thus obtained.

### Examples 22 and 23 (E22 and E23)

The procedures and conditions for preparing the condensation type non-isocyanate polyurethane resin of each of E22 and E23 were substantially similar to those of E8, except that in E22, PTMEG 1000 was replaced with poly(hexamethylene) diol 1000 (PHC diol 1000) (purchased from Tosoh Corporation, product name: Nippollan 981), and in E23, PTMEG 1000 was replaced with polybutylene adipate 1000 (PBA 1000) (purchased from Evermore Chemical Industry Co., Ltd.). The condensation type non-isocyanate polyurethane resin of each of E22 and E23 was thus obtained.

### Example 24 (E24)

The procedures and conditions for preparing the condensation type non-isocyanate polyurethane resin of E24 were substantially similar to those of E2, except that in E24, EC was replaced with dimethyl carbonate (DMC) (purchased from Emperor Chemical Co., Ltd.). The condensation type non-isocyanate polyurethane resin of E24 was thus obtained.

### Comparative Examples 1 to 5 (CE1 to CE5)

The procedures and conditions for preparing the condensation type non-isocyanate polyurethane resin of each of CE1 to CE5 were substantially similar to those of E1, except that in each of CE1 to CE5, the amounts of PTMEG 1000 and PEG 600 were respectively changed to 247.5 g and 22.5 g; in CE1 to CE5, the time periods for controlling the pressure reduction from 30 torr to 3 torr were changed to be within 0.5 hours, 1 hour, 2 hours, 3 hours, 3 hours, respectively; and that in CE5, the time period for conducting the polycondensation reaction was changed to 1 hour. The condensation type non-isocyanate polyurethane resin of each of CE1 to CE5 was thus obtained.

### Comparative Examples 6 to 10 (CE6 to CE10)

The procedures and conditions for preparing the condensation type non-isocyanate polyurethane resin of each of CE6 to CE10 were substantially similar to those of CE1, except that in each of CE6 to CE10, the amounts of EC, PTMEG 1000, PEG 600, and HMDA were respectively changed to 97 g, 0 g, 292.5 g, and 60.5 g, and the time periods for controlling the pressure reduction from 30 torr to 3 torr were changed to be within 0.5 hours, 1 hour, 2 hours, 3 hours, 3 hours, respectively. The condensation type non-isocyanate polyurethane resin of each of CE6 to CE10 was thus obtained.

### Comparative Examples 11 to 16 (CE11 to CE16)

The procedures and conditions for preparing the condensation type non-isocyanate polyurethane resin of each of CE11 to CE16 were similar to those of E1, E4, E7, E10, E13, and E16, respectively, except that the time period for controlling the pressure reduction from 30 torr to 3 torr was changed to be within 0.5 hours. The condensation type non-isocyanate polyurethane resin of each of CE11 to CE16 was thus obtained.

### Comparative Examples 17 to 22 (CE17 to CE22)

The procedures and conditions for preparing the condensation type non-isocyanate polyurethane resin of each of CE17 to CE22 were correspondingly similar to those of CE11 to CE16, except that the time period for conducting the polycondensation reaction was changed to 1 hour, and the time period for controlling the pressure reduction from 30 torr to 3 torr was changed to be within 3 hours. The condensation type non-isocyanate polyurethane resin of each of CE17 to CE22 was thus obtained.

### Comparative Example 23 (CE23)

The procedures and conditions for preparing the condensation type non-isocyanate polyurethane resin of CE23 were substantially similar to those of E16, except that the carbamate mixture obtained from the carbamation reaction was further subjected to washing with water, filtration (to remove liquids therein) and recrystallization in sequence. The condensation type non-isocyanate polyurethane resin of CE23, which was mainly composed of carbamate diol, was thus obtained.

### Comparative Example 24 (CE24)

First, 110 g of dimethyl carbonate (DMC) and 70 g of hexane-1,6-diamine (HMDA) were mixed in a 1 L stainless steel reactor, and then subjected to a carbamation reaction at 75°C under stirring for 5 hours, so as to obtain a mixture. Thereafter, 27 g of 1,4-butanediol (BDO) (purchased from Emperor Chemical Co., Ltd.) was added to the mixture by stirring to allow a reaction to proceed under a nitrogen environment at 140°C for 3 hours, followed by addition of 225 g of PTMEG 1000 and 45 g of PEG 600, thereby obtaining a carbamate mixture of CE24.

After adding stannous chloride (SnCl₂) (serving as a catalyst) into the aforesaid reactor, a polycondensation reaction was conducted at 180°C and at a pressure of not greater than 30 torr for a time period of 0.5 hours, followed by controlling the pressure by reduction of the same to 3 torr for a time period within 1 hour until the product viscosity no longer increased, so as to obtain a condensation type non-isocyanate polyurethane resin of CE24.

### Comparative Example 25 (CE25)

Thermoplastic polyurethane (TPU) pellets purchased from Coating P. Materials Co., Ltd. (product no.: ER-80AML), which were obtained by reacting polybutylene adipate (PBA) and methylene diphenyl diisocyanate (MDI) (a raw material used for producing the TPU pellets and containing the PBA and the MDI does not contain an ethylene glycol unit represented by Formula (III)), directly serve as a polyurethane resin of CE25.

### Property evaluation of condensation type non-isocyanate polyurethane resin and polyurethane resin

Each of the condensation type non-isocyanate polyurethane resins of E1 to E24 and CE1 to CE24 and the polyurethane resin of CE25 was subjected to measurements described below. The results for the measurements are listed in Tables 2 to 5 below.

### 1. Amine value

Each of the condensation type non-isocyanate polyurethane resins of E1 to E24 and CE1 to CE24 and the polyurethane resin of CE25 were subjected to measurement of amine value according to the procedures set forth in American Society for Testing and Materials (ASTM) D2074(2019).

### 2. Strength factor

Each of the condensation type non-isocyanate polyurethane resins of E1 to E24 and CE1 to CE24 was subjected to nuclear magnetic resonance (NMR) analysis using ¹H NMR (DMSO-*d*₆), so as to obtain an NMR spectrum thereof. An integrated area (A1) of the chemical shift (δ) ranging from 5.6 ppm to 5.8 ppm (representing a number of hydrogen atoms from urea units) and an integrated area (A2) of the chemical shift ranging from 6.7 ppm to 7.3 ppm (representing a number of hydrogen atoms from carbamate units) were calculated, and the strength factor of the condensation type non-isocyanate polyurethane resin was defined as A1/(A1+A2).

### 3. Moisture permeability factor

Each of the condensation type non-isocyanate polyurethane resins of E1 to E24 and CE1 to CE24 was subjected to nuclear magnetic resonance (NMR) analysis using ¹H NMR (DMSO-*d*₆), so as to obtain an NMR spectrum thereof. An integrated area (A1) of the chemical shift (δ) ranging from 5.6 ppm to 5.8 ppm (representing a number of hydrogen atoms from urea units), an integrated area (A2) of the chemical shift ranging from 6.7 ppm to 7.3 ppm (representing a number of hydrogen atoms from carbamate units), and an integrated area (A3) of the chemical shift ranging from 3.4 ppm to 3.6 ppm (representing a number of hydrogen atoms from ethylene glycol units) were calculated, and the moisture permeability factor of the condensation type non-isocyanate polyurethane resin was defined as A3/(A1+A2).

### Preparation of waterproof and moisture-permeable membrane and film

First, 98 parts by weight of each of the condensation type non-isocyanate polyurethane resins of E1 to E24 and CE1 to CE24 and the polyurethane resin of CE25 were mixed with 0.9 parts by weight of acetyl tributyl citrate (ATBC) (serving as a plasticizer), 0.9 parts by weight of epoxidized styrene-acrylic resin (Joncryl^{®} ADR-4370) (serving as a chain extender), and 0.2 parts by weight of erucamide (serving as an anti-blocking agent), so as to obtain a mixture. Next, the mixture was heated to 170°C to be melted, and then was subjected to a pelletizing treatment using a twin-screw extruder at a temperature ranging from 140°C to 160°C and under a screw speed ranging from 200 rpm to 400 rpm. The resultant pellets were processed into a film using a blown film machine (purchased from QUEEN'S MACHINERY CO., LTD.; Model: FL-018-00) under the following conditions: die head temperature gradient of 130°C/150°C/150°C/160°C/140°C, screw speed of 200 rpm to 400 rpm, haul-off speed of 5 m/min to 10 m/min, and blow-up ratio of 4. Each of the waterproof and moisture-permeable membranes of E1 to E24 and each of the films of CE1 to CE25 were thus obtained.

### Property evaluation of waterproof and moisture-permeable membrane and film

Each of the waterproof and moisture-permeable membranes of E1 to E24 and each of the films of CE1 to CE25 were subjected to measurements described below. The results for the measurements are listed in Tables 2 to 5 below.

### 1. Thickness

Each of the waterproof and moisture-permeable membranes of E1 to E24 and each of the films of CE1 to CE24 were subjected to measurement of thickness at three different points thereof using a thickness gauge (purchased from OZAKI MFG. CO., LTD. (PEACOCK); Model: G-6C). The average thickness of each of the waterproof and moisture-permeable membranes of E1 to E24 and each of the films of CE1 to CE24 ranged from 21 µm to 25 µm.

### 2. Tensile strength

Each of the waterproof and moisture-permeable membranes of E1 to E24 and each of the films of CE1 to CE24 were subjected to measurement of tensile strength using a tensile testing machine (purchased from Instron^{®}; Model: 5566) according to the procedures set forth in Method B of ASTM D412-98a(2002)e1.

### 3. Moisture permeability

Each of the waterproof and moisture-permeable membranes of E1 to E24 and each of the films of CE1 to CE25 were subjected to measurement of moisture permeability using a water vapor permeability testing machine (purchased from PERFECT INTERNATIONAL INSTRUMENTS CO., LTD.; Model: PT-50B1) according to the procedures set forth in Japanese Industrial Standards (JIS) L1099 B1(2021).

### 4. Young's modulus

Each of the waterproof and moisture-permeable membranes of E1 to E24 and each of the films of CE1 to CE24 were subjected to measurement of Young's modulus using a tensile testing machine (purchased from Instron^{®}; Model: 5566) according to the procedures set forth in Method B of ASTM D412-98a(2002)e1.

### 5. Hydrostatic pressure resistance

Each of the waterproof and moisture-permeable membranes of E1 to E24 and each of the films of CE1 to CE24 were subjected to measurement of hydrostatic pressure resistance using a hydrostatic pressure testing machine (purchased from TIEN SHIANG TRADE & ENGINEERING CO., LTD.; Model: 322-PC) according to the procedures set forth in JIS L1092 B(2009).

**Table 2**

| | Condensation type non-isocyanate polyurethane resin | | | Waterproof and moisture-permeable membrane | | | |
|---|---|---|---|---|---|---|---|
| | Amine value (meq/kg) | Strength factor | Moisture permeability factor | Tensile strength (MPa) | Moisture permeability (g/m²·24 h) | Young's modulus (MPa) | Hydrostatic pressure resistance (mmH₂O) |
| E1 | 16 | 0.1064 | 3.32 | 13.3 | 11000 | 17 | 14300 |
| E2 | 22 | 0.2094 | 3.36 | 13.6 | 12000 | 37 | 14200 |
| E3 | 28 | 0.2901 | 3.16 | 14.3 | 13000 | 58 | 14400 |
| E4 | 16 | 0.1103 | 6.64 | 13.2 | 46000 | 16 | 13400 |
| E5 | 23 | 0.2163 | 6.93 | 13.5 | 43000 | 36 | 13500 |
| E6 | 29 | 0.2894 | 6.75 | 13.9 | 43000 | 57 | 13600 |
| E7 | 17 | 0.1056 | 9.95 | 12.8 | 61000 | 16 | 13100 |
| E8 | 24 | 0.2236 | 10.04 | 13.1 | 61000 | 36 | 13100 |
| E9 | 30 | 0.2936 | 9.89 | 13.5 | 63000 | 56 | 13200 |
| E10 | 18 | 0.1051 | 13.27 | 11.9 | 71000 | 16 | 12900 |
| E11 | 24 | 0.2148 | 13.04 | 12.4 | 71000 | 36 | 13000 |
| E12 | 32 | 0.2894 | 12.75 | 12.6 | 72000 | 56 | 13000 |
| E13 | 19 | 0.1012 | 16.59 | 10.8 | 91000 | 15 | 12400 |
| E14 | 25 | 0.2232 | 15.95 | 11.4 | 92000 | 34 | 12500 |
| E15 | 33 | 0.2974 | 17.05 | 11.5 | 92000 | 55 | 12500 |
| E16 | 21 | 0.1103 | 19.91 | 9.7 | 98000 | 15 | 12000 |
| E17 | 26 | 0.2145 | 20.13 | 10.2 | 96000 | 34 | 12100 |
| E18 | 34 | 0.2996 | 19.54 | 10.6 | 97000 | 55 | 12200 |
| E19 | 22 | 0.2154 | 3.12 | 12.9 | 12000 | 21 | 14100 |
| E20 | 21 | 0.1969 | 3.49 | 13.1 | 12000 | 22 | 14200 |
| E21 | 20 | 0.2204 | 3.32 | 12.4 | 12000 | 22 | 14100 |
| E22 | 23 | 0.1681 | 10.03 | 15.7 | 62000 | 38 | 13500 |
| E23 | 24 | 0.1823 | 9.89 | 14.1 | 61000 | 34 | 13200 |
| E24 | 21 | 0.2054 | 3.18 | 13.7 | 11000 | 27 | 14300 |

As shown in Table 2, each of the condensation type non-isocyanate polyurethane resins of E1 to E24 exhibited an amine value of not lower than 16 meq/kg, an strength factor ranging from 0.1012 to 0.2996, and a moisture permeability factor ranging from 3.12 to 20.13, and the waterproof and moisture-permeable membranes of E1 to E24, which were respectively produced from the condensation type non-isocyanate polyurethane resins of E1 to E24, each exhibited a moisture permeability ranging from 11000 g/m²·24 h to 98000 g/m²·24 h, a Young's modulus ranging from 15 MPa to 58 MPa, and a hydrostatic pressure resistance of not lower than 12000 mmH₂O. These results demonstrate that when a strength factor of a condensation type non-isocyanate polyurethane resin is controlled to range from 0.1012 and 0.2996, and a moisture permeability factor thereof is controlled to range from 3.12 and 20.13, a waterproof and moisture-permeable membrane produced from such condensation type non-isocyanate polyurethane resin can provide a dry and non-sticky feel, has moderate elasticity and strength, and are resistant to water pressure.

**Table 3**

| | Condensation type non-isocyanate polyurethane resin | | | Film | | | |
|---|---|---|---|---|---|---|---|
| | Amine value (meq/kg) | Strength factor | Moisture permeability factor | Tensile strength (MPa) | Moisture permeability (g/m²·24 h) | Young's modulus (MPa) | Hydrostatic pressure resistance (mmH₂O) |
| CE1 | 14 | 0.0684 | 1.69 | 13.7 | 8500 | 14 | 14300 |
| CE2 | 15 | 0.1065 | 1.49 | 13.9 | 8200 | 17 | 14400 |
| CE3 | 21 | 0.2114 | 1.57 | 14.5 | 8300 | 38 | 14500 |
| CE4 | 27 | 0.3145 | 1.71 | 15.4 | 7800 | 58 | 14600 |
| CE5 | 30 | 0.3473 | 1.59 | 15.6 | 8100 | 65 | 14600 |
| CE6 | 15 | 0.0586 | 24.65 | 8.5 | 125000 | 11 | 8400 |
| CE7 | 21 | 0.1196 | 23.94 | 9.1 | 123000 | 15 | 8500 |
| CE8 | 26 | 0.1863 | 24.98 | 9.5 | 122500 | 33 | 9000 |
| CE9 | 35 | 0.3151 | 25.09 | 9.7 | 121000 | 54 | 10100 |
| CE10 | 37 | 0.3707 | 24.65 | 10.1 | 123000 | 62 | 10300 |

As shown in Table 3, each of the condensation type non-isocyanate polyurethane resins of CE1 to CE5 exhibited a moisture permeability factor of not greater than 1.71, and the films of CE1 to CE5, which were respectively produced from the condensation type non-isocyanate polyurethane resins of CE1 to CE5, each exhibited a moisture permeability of not greater than 8500 g/m²·24 h, indicating that the films had insufficient moisture permeability as water vapor and moisture cannot easily pass therethrough, which may cause a user of the films to feel damp and stuffy. In addition, each of the condensation type non-isocyanate polyurethane resins of CE6 to CE10 exhibited a moisture permeability factor of not lower than 23.94, and the films of CE6 to CE10, which were respectively produced from the condensation type non-isocyanate polyurethane resins of CE6 to CE10, each exhibited a moisture permeability of not lower than 121000 g/m²·24 h, and a hydrostatic pressure resistance of not greater than 10300 mmH₂O, indicating that the films may cause an overly sticky (not dry) feel and has insufficient water pressure resistance.

**Table 4**

| | Condensation type non-isocyanate polyurethane resin | | | Film | | | |
|---|---|---|---|---|---|---|---|
| | Amine value (meq/kg) | Strength factor | Moisture permeability factor | Tensile strength (MPa) | Moisture permeability (g/m²·24 h) | Young's modulus (MPa) | Hydrostatic pressure resistance (mmH₂O) |
| CE11 | 15 | 0.0531 | 3.41 | 12.3 | 11,000 | 13 | 14300 |
| CE12 | 15 | 0.0508 | 6.75 | 11.7 | 45,000 | 13 | 13400 |
| CE13 | 15 | 0.0486 | 9.74 | 11.3 | 60,000 | 12 | 13100 |
| CE14 | 15 | 0.0483 | 12.94 | 10.8 | 73,000 | 12 | 12900 |
| CE15 | 15 | 0.0476 | 17.23 | 10.2 | 93,000 | 12 | 12400 |
| CE16 | 15 | 0.0436 | 20.12 | 9.1 | 100,000 | 11 | 8400 |
| CE17 | 31 | 0.3718 | 3.15 | 14.5 | 12,000 | 64 | 14100 |
| CE18 | 33 | 0.3697 | 6.81 | 13.8 | 42,000 | 64 | 13500 |
| CE19 | 33 | 0.3622 | 9.65 | 13.6 | 62,000 | 63 | 13200 |
| CE20 | 35 | 0.3591 | 14.03 | 13.2 | 74,000 | 63 | 13000 |
| CE21 | 35 | 0.3533 | 17.11 | 12.5 | 93,000 | 63 | 12500 |
| CE22 | 36 | 0.3541 | 20.23 | 11.6 | 98,000 | 63 | 12200 |

As shown in Table 4, each of the condensation type non-isocyanate polyurethane resins of CE11 to CE16 exhibited a strength factor of not greater than 0.0531, and the films of CE11 to CE16, which were respectively produced from the condensation type non-isocyanate polyurethane resins of CE11 to CE16, each exhibited a Young's modulus of not greater than 13 MPa, indicating that the films of CE11 to CE16 are easily deformed and difficult to be processed or shaped (causing an overly soft feel). Additionally, the film of CE16 showed insufficient water pressure resistance. Moreover, each of the condensation type non-isocyanate polyurethane resins of CE17 to CE22 exhibited a strength factor of not lower than 0.3533, and the films of CE17 to CE22, which were respectively produced from the condensation type non-isocyanate polyurethane resins of CE17 to CE22, each exhibited a Young's modulus of not lower than 63 MPa, indicating that these films had poor elasticity (causing an overly hard feel).

**Table 5**

| | Condensation type non-isocyanate polyurethane resin/polyurethane resin | | | Film | | | |
|---|---|---|---|---|---|---|---|
| | Amine value (meq/kg) | Strength factor | Moisture permeability factor | Tensile strength (MPa) | Moisture permeability (g/m²·24 h) | Young's modulus (MPa) | Hydrostatic pressure resistance (mmH₂O) |
| CE23 | 8 | 0.0467 | 20.03 | 9.0 | 99000 | 11 | 11900 |
| CE24 | 9 | 0.0521 | 3.56 | 9.5 | 12000 | 12 | 14000 |
| CE25 | 5 | - | - | - | 6700 | - | - |
| "-": Not determined | | | | | | | |

As shown in Table 5, each of the condensation type non-isocyanate polyurethane resins of CE23 and CE24 exhibited an amine value of not greater than 9 meq/kg, and a strength factor of not greater than 0.0521, and the films of CE23 and CE24, which were respectively produced from the condensation type non-isocyanate polyurethane resins of CE23 and CE24, each exhibited a Young's modulus of not greater than 12 MPa, indicating that the films of CE23 and CE24 are easily deformed and difficult to be processed or shaped (causing an overly soft feel).

Moreover, the polyurethane resin of CE25 exhibited an amine value of 5 meq/kg, and the film of CE25, which was produced from the polyurethane resin of CE25, exhibited a moisture permeability of merely 6700 g/m²·24 h, indicating that the film had quite insufficient moisture permeability.

In summary, the waterproof and moisture-permeable membrane made from the condensation type non-isocyanate polyurethan resin according to the present disclosure can provide a dry and non-sticky feel, has moderate elasticity, and therefore can indeed achieve the aim of the invention.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A condensation type polyurethane resin, **characterized by**:
a urea unit represented by Formula (I), a carbamate unit represented by Formula (II), an ethylene glycol unit represented by Formula (III), and a terminal amine unit, 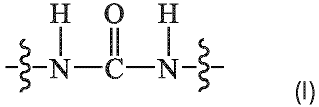 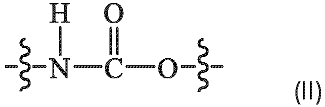 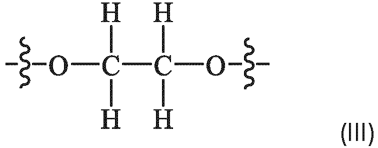
wherein in the condensation type polyurethane resin,
a number of hydrogen atoms belonging to the urea unit is defined as A1;
a number of hydrogen atoms belonging to the carbamate unit is defined as A2; and
a number of hydrogen atoms belonging to the ethylene glycol unit is defined as A3, and
wherein
A1/(A1+A2) ranges from 0.10 to 0.30; and
A3/(A1+A2) ranges from 3 to 21, and
the condensation type polyurethane resin having an amine value of at least 10 meq/kg.

2. The condensation type polyurethane resin as claimed in claim 1, wherein A1/(A1+A2) ranges from 0.15 to 0.25.

3. The condensation type polyurethane resin as claimed in claim 1 or 2, wherein A3/(A1+A2) ranges from 6 to 17.

4. The condensation type polyurethane resin as claimed in any one of claims 1 to 3, further comprising a diol unit represented by Formula (IV), 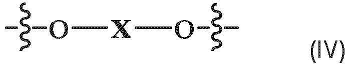 wherein in Formula (IV),
X is selected from a non-ethylene hydrocarbylene group or an oxygen-containing organic group.

5. The condensation type polyurethane resin as claimed in any one of claims 1 to 4, wherein each of A1, A2 and A3 is determined by integrating a peak area in an ¹H NMR spectrum of the condensation type polyurethane resin.

6. The condensation type polyurethane resin as claimed in any one of claims 1 to 5, which includes a first carbamate segment represented by Formula (V), a second carbamate segment represented by Formula (VI), and a urea-containing segment represented by Formula (VII), 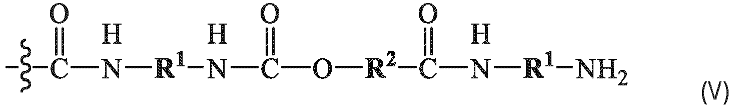 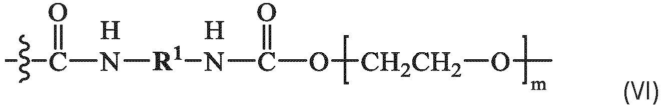 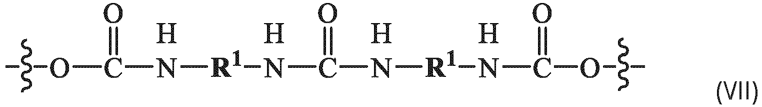 wherein in each of Formulae (V) to (VII),
R¹ is a hydrocarbylene group of C₂ to C₂₀; and
R² is selected from the group consisting of 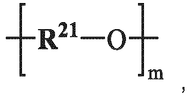 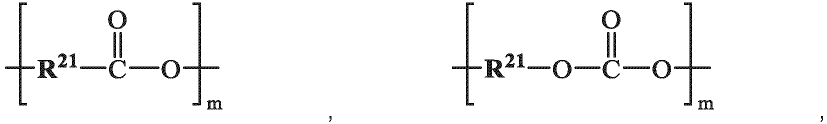 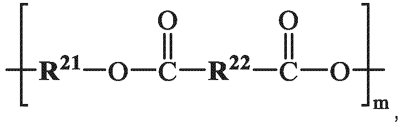 and combinations thereof, and
wherein
each of R²¹ and R²² is independently a hydrocarbylene group of C₂ to C₂₀; and
m is an integer ranging from 1 to 250.

7. The condensation type polyurethane resin as claimed in claim 6, which further includes a third carbamate segment represented by Formula (VIII), 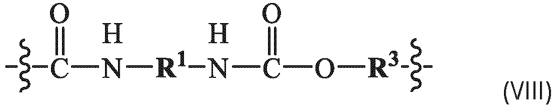 wherein in Formula (VIII),
R¹ is a hydrocarbylene group of C₂ to C₂₀; and
R³ is selected from the group consisting of 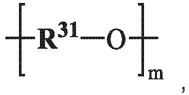 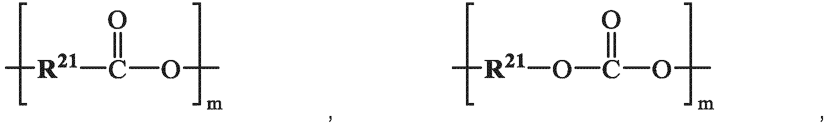 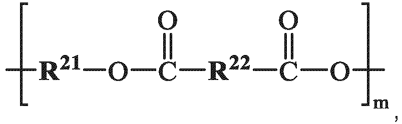 and combinations thereof, and
wherein
each of R²¹ and R²² is independently a hydrocarbylene group of C₂ to C₂₀;
R³¹ is a hydrocarbylene group of C₃ to C₂₀; and
m is an integer ranging from 1 to 250.

8. The condensation type polyurethane resin as claimed in claims 6 or 7, wherein R² is selected from the group consisting of 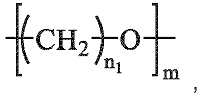 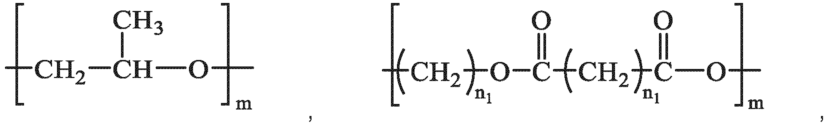 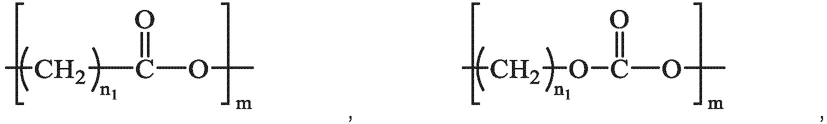 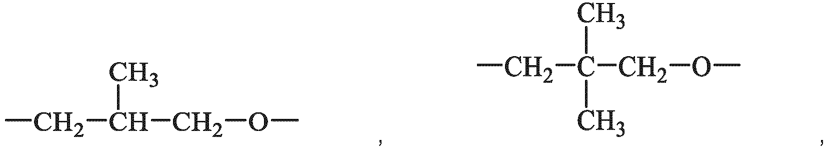 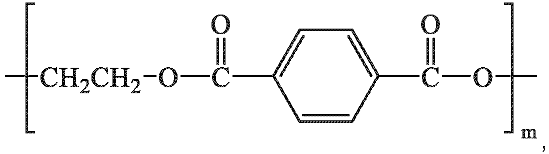 and combinations thereof, and wherein n₁ is an integer ranging from 2 to 20; and m is an integer ranging from 1 to 250.

9. The condensation type polyurethane resin as claimed in claim 8, wherein R² is selected from the group consisting of 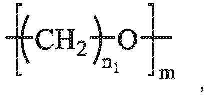 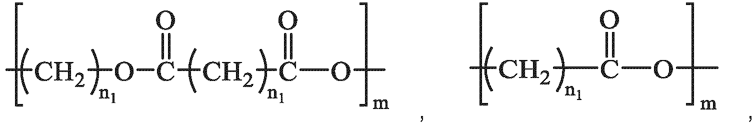 and combinations thereof.

10. A method for manufacturing a condensation type polyurethane resin, **characterized in that** the condensation type polyurethane resin is formed by subjecting a diamine compound, a carbonate compound and a diol compound to a reaction, the diol compound including a polyethylene glycol,
wherein based on 100 wt% of a total amount of the diamine compound, the carbonate compound and the diol compound, the polyethylene glycol is present in an amount ranging from 10 wt% to 60 wt%,
wherein the condensation type polyurethane resin includes a first carbamate segment represented by Formula (V), a second carbamate segment represented by Formula (VI), and a urea-containing segment represented by Formula (VII), 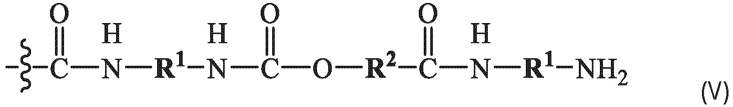 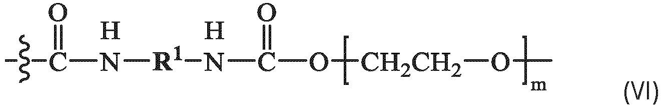 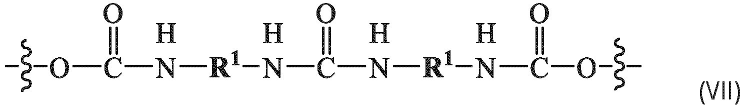 wherein in each of Formulae (V) to (VII),
R¹ is a hydrocarbylene group of C₂ to C₂₀; and
R² is selected from the group consisting of 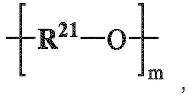 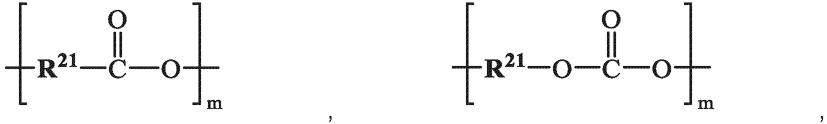 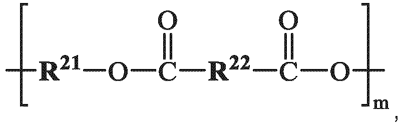 and combinations thereof, and
wherein
each of R²¹ and R²² is independently a hydrocarbylene group of C₂ to C₂₀; and
m is an integer ranging from 1 to 250.

11. The method as claimed in claim 10, wherein based on 100 wt% of the total amount of the diamine compound, the carbonate compound and the diol compound, the polyethylene glycol is present in an amount ranging from 20 wt% to 60 wt%.

12. The method as claimed in claim 10 or 11, wherein the diol compound further includes a non-polyethylene glycol diol compound.

13. A waterproof and moisture-permeable membrane, which is prepared by subjecting a mixture including a condensation type polyurethane resin as claimed in any one of claims 1 to 9 to a film-forming process.

14. The waterproof and moisture-permeable membrane as claimed in claim 13, which has a moisture permeability ranging from 10000 g/m²·24 hours to 100000 g/m²·24 hours as determined in accordance with Japanese Industrial Standards (JIS) L1099 B1.

15. The waterproof and moisture-permeable membrane as claimed in claim 13 or 14, which has a Young's modulus ranging from 15 MPa to 60 MPa as determined in accordance with American Society for Testing and Materials (ASTM) D412.
